# EUROPEAN PATENT SPECIFICATION

(11) **EP 3 454 602 B1**
(45) Date of publication and mention of the grant of the patent: **01.04.2020**
(21) Application number: 17190190.3
(22) Date of filing: 08.09.2017
(51) Int. Cl.: H04W 36/00, H04W 36/32

(54) **INCLUSION OF ADDITIONAL CELLS IN A MEASUREMENT REPORT**
EINBEZIEHUNG VON ZUSÄTZLICHEN ZELLEN IN EINEN MESSBERICHT
INCLUSION DE CELLULES SUPPLÉMENTAIRES DANS UN RAPPORT DE MESURE

(43) Date of publication of application: 13.03.2019
(73) Proprietor: Intel IP Corporation, Santa Clara, CA 95054 (US)
(72) Inventor: MANN, Rohit, San Diego, CA California 92129 (US); KARELLA, Ranganadh Ranga, San Diego, CA California 92131 (US); NICKISCH, Dirk, 85667 Oberpframmern (DE); ISKANDER, Shadi M., 82008 Unterhaching (DE); RAMACHANDRA, Shrinidhi, Bangalore - 560085, Karnataka (IN); DARWEESH, Tamer, 80992 Munich (DE)
(74) Representative: Viering, Jentschura & Partner mbB Patent- und Rechtsanwälte

(56) References cited:
- US-A1- 2015 281 989
- "3rd Generation Partnership Project; Technical Specification Group Radio Access Network; Evolved Universal Terrestrial Radio Access (E-UTRA); Radio Resource Control (RRC); Protocol specification (Release 14)", 3GPP DRAFT; 36331-E30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 13 July 2017 (2017-07-13), XP051306346, Retrieved from the Internet: URL:http://www.3gpp.org/ftp/tsg_ran/WG2_RL 2/Specifications/201706_final_specs_after_ RAN_76/ [retrieved on 2017-07-13]
- HUAWEI ET AL: "Measurement Report Mechanism for Drones", 3GPP DRAFT; R2-1708545 MEASUREMENT REPORT MECHANISM FOR DRONES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318397, Retrieved from the Internet: URL:http://www.3gpp.org/ftp/Meetings_3GPP_ SYNC/RAN2/Docs/ [retrieved on 2017-08-20]
- NTT DOCOMO ET AL: "Initial views on potential problems and solutions for aerial vehicles", 3GPP DRAFT; R2-1704333_INITIAL VIEWS ON POTENTIAL PROBLEMS AND SOLUTIONS FOR AERIAL VEHICLES, 3RD GENERATION PARTNERSHIP PROJECT (3GPP), MOBILE COMPETENCE CENTRE ; 650, ROUTE DES LUCIOLES ; F-06921 SO , vol. RAN WG2, no. Hangzhou; 20170515 - 20170519 14 May 2017 (2017-05-14), XP051274908, Retrieved from the Internet: URL:http://www.3gpp.org/ftp/Meetings_3GPP_ SYNC/RAN2/Docs/ [retrieved on 2017-05-14]
- NTT DOCOMO ET AL: "Measurements Reporting Enhancements for UAV UE", 3GPP DRAFT; R2-1709396_MEASUREMENT ENH FOR DRONE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051319127, Retrieved from the Internet: URL:http://www.3gpp.org/ftp/Meetings_3GPP_ SYNC/RAN2/Docs/ [retrieved on 2017-08-20]

## Description

### Technical Field

Various embodiments relate generally to methods and devices for generating a prioritized report for cell handover.

### Background

Wireless communication systems may use a handover (also known as "handoff") procedure to redirect a mobile device from a first cell to a second cell. This is most commonly performed when the first cell's signal degrades, and the second cell's signal is preferable to that of the first cell. During the handover procedure, a user device receives an instruction to provide a measurement report for potential alternative cells. Upon identifying a candidate cell for handover, the user device begins a timer, during the length of which the user device tests a candidate cell's signal. At the conclusion of the timer, the user device may provide measurement information to the network, which then uses this information to select a candidate cell for handover. Where multiple candidate cells fulfil criteria for handover, the network may select a non-ideal candidate due to the order in which the non-ideal candidate was reported. A procedure for delaying transmission of a measurement report is known in at least Yang, et al. (US2015/281,989 A1), which discloses a user equipment (UE) transmitting measurement reports, and postponing the transmission of a measurement report when a neighbor cell signal strength is greater than the signal strength of the target cell(s). In one instance, the UE identifies a target cell having the strongest signal strength. In another instance, the UE postpones a transmission of a measurement report for a target cell when a neighbor cell signal strength is greater than the strongest target cell signal strength and the strongest target cell signal strength is below an absolute threshold value. A procedure for triggering a measurement report and for transferring measurement results from a user equipment to a E-UTRAN is disclosed in at least "3rd Generation Partnership Project; Technical Specification Group Radio Access Network; Evolved Universal Terrestrial Radio Access (E-UTRA); Radio Resource Control (RRC); Protocol specification (Release 14)", 3GPP DRAFT; 36331-E30, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 13 July 2017 (2017-07-13), Retrieved from the Internet: URL: http://www.3gpp.org/ftp/tsg_ran/WG2_RL2/Specifications/201706_final_specs_after_RAN_ 76/|

### Summary of the Invention

The invention is defined by the independent claims and advantageous embodiments are defined by the dependent claims.

### Brief Description of the Drawings

In the drawings, like reference characters generally refer to the same parts throughout the different views. The drawings are not necessarily to scale, emphasis instead generally being placed upon illustrating the principles of the Disclosure. In the following description, various aspects of the Disclosure are described with reference to the following drawings, in which:
FIG. **1** shows communication between a mobile device and a network during a legacy handover procedure;
FIG. **2** shows time to trigger timers for cells in a legacy handover procedure;
FIG. **3a** shows time to trigger timers for cells according to a first aspect of the Disclosure;
FIG. **3b** shows time to trigger timers for cells according to a second aspect of the Disclosure;
FIG. **4** shows a flowchart for a handover procedure according to an aspect of the Disclosure;
FIG. **5** shows communication between a mobile device and a network during a handover procedure according to an aspect of the Disclosure;
FIG: **6** shows suboptimal handovers according to an aspect of the Disclosure;
FIG. **7** shows a prioritization of measurement reports according to an aspect of the Disclosure;
FIG. **8** shows a device for handover management;
FIG. **9** shows a system for handover management;
FIG. **10** shows an apparatus for handover management; and
FIG. **11** shows a method for handover management.

### Description

The following detailed description refers to the accompanying drawings that show, by way of illustration, specific details and aspects in which the Disclosure may be practiced.

The word "exemplary" is used herein to mean "serving as an example, instance, or illustration." Any embodiment or design described herein as "exemplary" is not necessarily to be construed as preferred or advantageous over other embodiments or designs.

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more. The terms "proper subset", "reduced subset", and "lesser subset" refer to a subset of a set that is not equal to the set, i.e. a subset of a set that contains less elements than the set.

A "circuit" as user herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit ("CPU"), Graphics Processing Unit ("GPU"), Digital Signal Processor ("DSP"), Field Programmable Gate Array ("FPGA"), integrated circuit, Application Specific Integrated Circuit ("ASIC"), etc., or any combination thereof. Any other kind of implementation of the respective functions which will be described below in further detail may also be understood as a "circuit." It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component including one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

The term "base station" used in reference to an access point of a mobile communication network may be understood as a macro base station, micro base station, Node B, evolved NodeB ("Enb"), Home eNodeB, Remote Radio Head ("RRH"), relay point, etc., and may include base stations implemented with conventional base station architectures (e.g. distributed, "all-in-one", etc.) and base stations implemented with centralized base stations architectures (e.g. Cloud Radio Access Network ("Cloud-RAN") or Virtual RAN ("Vran")). As used herein, a "cell" in the context of telecommunications may be understood as a sector served by a base station. Accordingly, a cell may be a set of geographically co-located antennas that correspond to a particular sectorization of a base station. A base station may thus serve one or more cells (or sectors), where each cell is characterized by a distinct communication channel. Furthermore, the term "cell" may be utilized to refer to any of a macrocell, microcell, femtocell, picocell, etc.

For purposes of this disclosure, radio communication technologies may be classified as one of a Short-Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access ("WiMax") (e.g. according to an IEEE 802.16 radio communication standard, e.g. WiMax fixed or WiMax mobile) and other similar radio communication technologies. Cellular Wide Area radio communication technologies include GSM, UMTS, LTE, LTE-Advanced ("LTE-A"), CDMA, WCDMA, LTE-A, General Packet Radio Service ("GPRS"), Enhanced Data Rates for GSM Evolution ("EDGE"), High Speed Packet Access ("HSPA"), HSPA Plus ("HSPA+"), and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples.

The term "network" as utilized herein, e.g. in reference to a communication network such as a mobile communication network, encompasses both an access section of a network (e.g. a radio access network ("RAN") section) and a core section of a network (e.g. a core network section). The term "radio idle mode" or "radio idle state" used herein in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the term "transmit" encompasses both direct (point-to-point) and indirect transmission (via one or more intermediary points). Similarly, the term "receive" encompasses both direct and indirect reception. The term "communicate" encompasses one or both of transmitting and receiving, i.e. unidirectional or bidirectional communication in one or both of the incoming and outgoing directions.

Throughout this disclosure, the term "measurement report" is used to describe a report provided to the network, said report including at least one measurement of a cell, said report further being used for evaluation of one or more cells for handover. Current radio access technology standards define a Measurement Report. Where the term "measurement report" is used herein, it should be understood to include the currently used Measurement Report; however, the term measurement report as used herein is not intended to be limited to any particular standard and may include additional or alternative reports and/or report forms used for handover as described in other or subsequent radio access technology standards.

Where a serving cell decays, a handover procedure may be initiated. Such serving cell decay may be caused by a variety of factors including, but not limited to, user device movement. Where a serving cell signal decays, the user device may measure the serving cell signal. Once the serving cell decays below a threshold, the Radio Resource Control ("RRC") may send a report indicating serving cell decay, and the network may initiate a reconfiguration. During a reconfiguration, the user device measures signals from neighboring cells. When the signal for a neighboring cell rises above a threshold, the user device will start a timer, during which the neighboring cell is repeatedly measured. At the conclusion of the measurement timer, the user device sends a measurement report to the network. Based on information in the measurement report, the network may select a next cell for cell handover.

Although cell handover is known, current methods of cell handover may cause a user device to report to the network a non-ideal candidate for handover, despite a better handover candidate being available. This may result in a network instructing the user device to handover to a suboptimal cell. Herein are described various procedures for prioritizing cells during measurement reporting to improve the selection of a cell for handover.

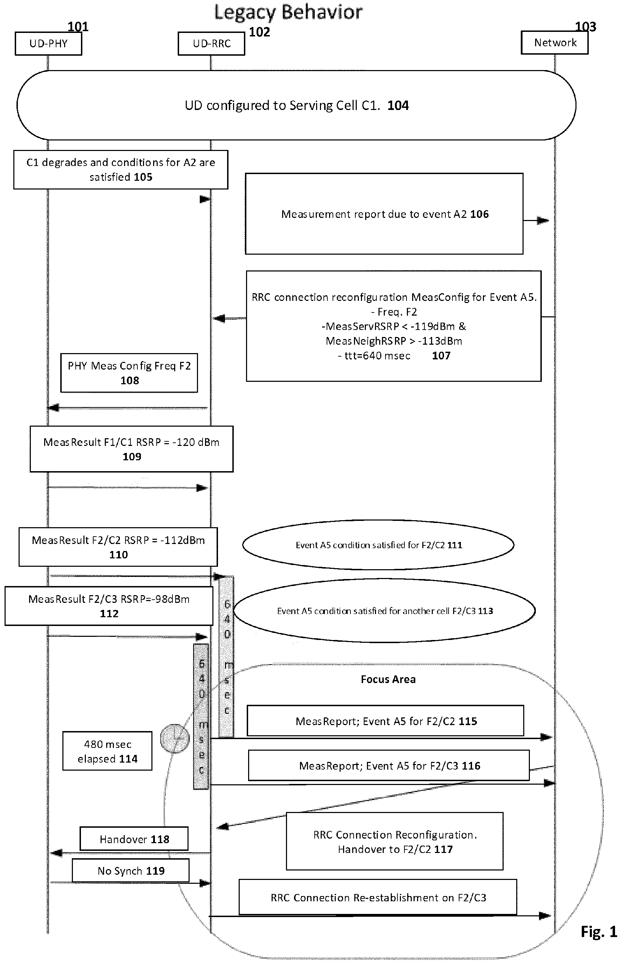

Fig. **1** shows a legacy handover procedure as depicted by communication between a user device and a network. The physical layer of the user device **101** communicates with the Radio Resource Control ("RRC") of the user device **102**, which communicates with the network **103.** The user device may be configured on a serving cell C1 **104** in range of a second cell C2. The serving cell service may degrade, whether from change in distance between the cell and the user device, interference, or otherwise. Where the serving cell degrades beyond a threshold value **105** (measurement reporting code A2), the user device informs the network that the serving cell has degraded beyond a threshold **106** (as displayed by measurement code A2). The network instructs the user device to measure neighboring cells to determine whether their signals may be stronger than the degraded primary cell signal, which, depending on the relevant standards, may be known as an A5 measurement report trigger **107.** The instruction for measurement is passed from the RRC **102** to the Physical Layer **101.** The user device begins to measure neighboring cells. In this case, and as an example only, the user device measures Cell 1 on Frequency 1 (the serving cell) **109**, Cell 2 on Frequency 2 **110**, and Cell 3 on Frequency 2 **112.** In this example, Cell 1 is operating at - 120dBm **109**, Cell 2 is operating at -112dBm **110**, and Cell 3 is operating at -98dBm **112.** For each set of measurements, the measurements are conducted repeatedly through a measurement timer **114**, which, in this case, and by way of example, is set to 640 msec. The first measurement timer is set for measurement of Cell 2, and the second measurement timer is set for measurement of Cell 3. Following expiration of the first timer, and where measurement of Cell 2 exceeds the A5 threshold, the user devices prepares a measurement report including measurement information for C2 **115**, at which time the timer for measurement of Cell 3 has not yet expired. At the conclusion of the timer for measurement of Cell 3, the user device sends a measurement report including measurement information for Cell 3 **116.** Until the report for Cell 3 is transmitted, the network is only aware of a single cell, namely Cell 2, which fulfills the A5 condition of exceeding a signal threshold. Only being aware of a single cell fulfilling the A5 conditions, the network may decide to perform a handover to Cell 2 **117**, even though Cell 3, which is operating at -98bBm rather than - 112dBm, is likely to provide a better result. The RRC transfers the handover command to the physical layer **101.** Under some circumstances, even though Cell 2 is less desirable for handover than Cell 3, the handover to Cell 2 may be successful. At best, this results in a less-than-optimal handover. Moreover, because Cell 2 is already a suboptimal cell, it may degrade sufficiently such that an additional handover quickly becomes necessary, at which time Cell 3 may be selected. Under other circumstances, the handover to Cell 2 may be impossible because of its suboptimal quality **119.** Where this occurs, the network may subsequently select Cell 3 for handover **120.** In each of these circumstances, valuable time is lost in achieving a satisfactory handover on Cell 3.

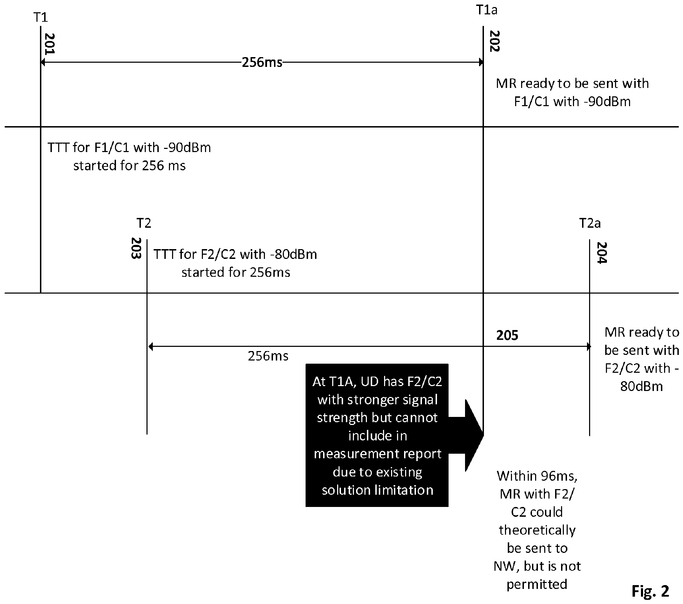

Fig. **2** shows a timing of measurement timers with respect to a preparation and sending of the measurement reports according to a legacy method. In this case, a first candidate for handover is Cell 1, and a second candidate for handover is Cell 2. The timer for measurement of Cell 1 spans from T1 **201** to T1a **202.** The timer for measurement Cell 2 spans from T2 **203** to T2a **204.** A timer is started for measurement of C1 **201**, wherein the timer is set for 256ms. Before the T1 timer is complete, a timer for measurement of C2 **203** is set, wherein this timer is also 256ms. At T1a **202**, the conclusion of the timer for T1 **201**, the timer for T2 **203** has elapsed 160ms **205** but is not yet complete. Nevertheless, a substantial portion of the timer for T2 **203** has elapsed and sufficient data has been gained that data for T2 that could theoretically be provided to the network for evaluation for handover. Under the legacy procedure, however, the data can first be provided to the network upon expiration of the timer for measurement. Thus, upon arriving at T1a **202**, the user device creates and transmits a measurement report containing measurement data from Cell 1, but not from Cell 2. In normal practice, a measurement report for T2 may be sent following expiration of the T2 timer, but the network, having already received a T1 report, may decide to order a handover to T1 before the T2 report is transmitted.

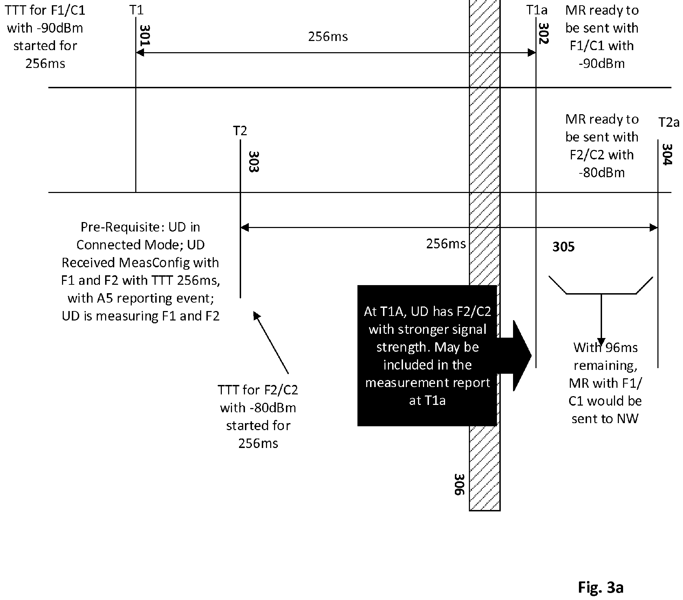

Fig. **3a** shows a timing of the measurement timers with respect to a preparation and sending of the measurement reports according to a first aspect of the Disclosure. In this case, a timer for measuring Cell 1 is started at T1 **301** and concludes at T1a **302.** A timer for measuring Cell 2 is started at T2 **303** and concludes at T2a **304.** At the expiration of the first timer at T1a **302**, the timer for Cell 2 has not yet expired **305.** Nevertheless, the elapsed duration of the timer for Cell 2 has exceeded a timer threshold **306.** The timer threshold **306** is a variable duration that can be configured as desired for the application. According to one aspect of the Disclosure, the timer threshold **306** may be set for 60% of the timer duration, although any duration may be selected based on at least the desired network parameters. Because Timer 2 has exceeded the timer threshold **306**, the user device may place information regarding Cell 2 that has been obtained during this testing period into the measurement report that is scheduled for the end of the first timer **302.** Otherwise stated, because a substantial portion of the Cell 2 testing has been completed, the network can be informed of the Cell 2 testing results before completion of the Cell 2 timer at T2a **304.** In this case, since Cell 1 tested at -96dBm, and since the preliminary tests of Cell 2 indicate functioning at -80dBm, Cell 2 may be a preferred candidate for handover. If the user device transmits only Cell 1's testing results in a measurement report, without transmitting information about Cell 2, the network may decide to handover to Cell 1, which would be suboptimal. Thus, the user device may include the preliminary test information from C2 in the measurement report. Because C2 appears to provide a better signal, including C2 in the report will permit the network to select C2 for handover, thereby resulting in an improved handover experience.

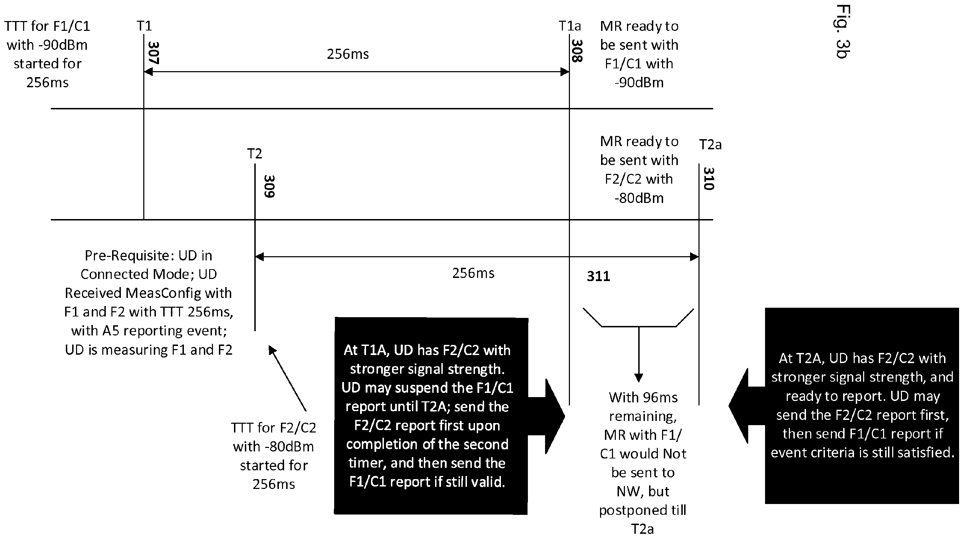

Fig. **3b** shows a timing of the measurement timers with respect to a preparation and sending of the measurement reports according to a second aspect of the Disclosure. In this case, a timer for measuring Cell 1 is started at T1 **307** and concludes at T1a **308.** A timer for measuring Cell 2 **311** is started at T2 **309** and concludes at T2a **310.** At the expiration of the first timer at T1a **308**, the timer for Cell 2 has not yet expired. Although a measurement report for Cell 1 is conventionally transmitted at T1a **308**, and according to this second aspect of the description, the user device may postpone the transmission of the measurement report until completion of the measurement timer for Cell 2 at T2a **310**, since the timer for Cell 2 is set to expire shortly. At point T2a **310** it is determined that F2/C2 has a stronger signal strength than F1/C1. In order to decrease the likelihood of the network selecting Cell 1 for handover, the user device may send the F2/C2 report first, and then subsequently send the measurement report for F1/C1 if the report is still valid.

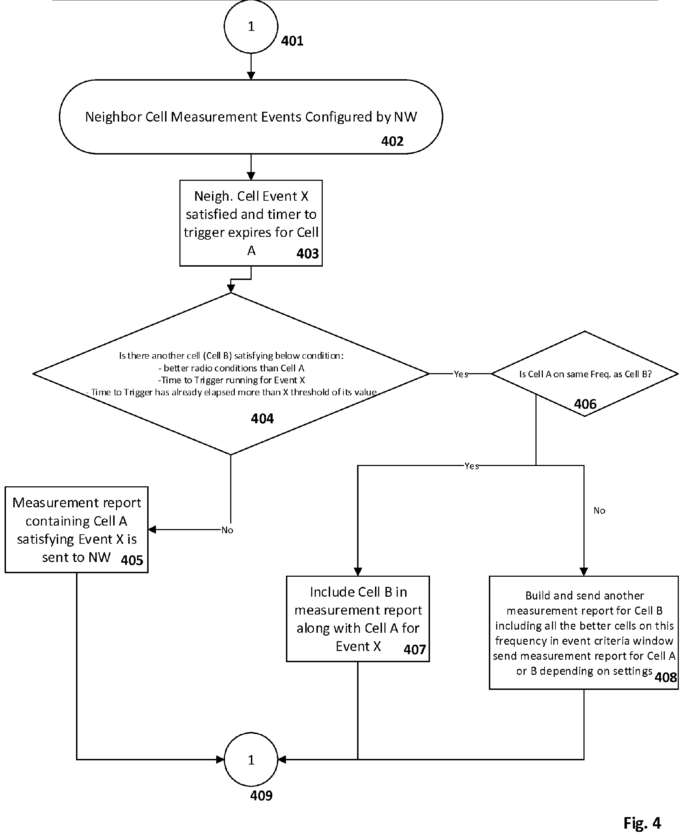

Fig. **4** shows a flowchart for evaluating cells corresponding to non-elapsed timers for inclusion in a measurement report. The state of operating on a primary cell is depicted as **401.** During operation, the network instructs the user device to measure neighboring cells **402.** In the usual course of measurement, the user device seeks neighboring cells providing a signal above a predetermined threshold. Where a first neighboring cell with a corresponding signal above the predetermined threshold is found, in this case cell A, the user device sets a time to trigger timer. After identifying cell A as exceeding a predetermined threshold and setting the time to trigger timer, cell A is measured throughout the time to trigger timer duration until the expiration of the timer **403.** Although a measurement report would normally be produced for cell A at this time, the user device must determine whether any neighboring cells offer better radio conditions then cell A, whether a time to trigger timer is running for said cell or cells, and whether the corresponding time to trigger timer has elapsed beyond a predetermined threshold **404.** Where these conditions are not fulfilled, the user device prepares a measurement report for Cell A and provides said measurement report to the network **405.** Where these conditions are fulfilled, the user device determines whether Cell A is operating on the same frequency as the additional cell fulfilling these conditions, herein referred to as Cell B **406.** Where Cell A and Cell B are operating on the same frequency, Cell B is included in the measurement report along with Cell A **407.** Where Cell A and Cell B are operating on different frequencies, separate measurement reports are created for Cell A and Cell B, and these reports are sent to the network in order determined by additional settings **408.** The network selects a cell for handover, and handover is achieved whereby the user device transmits on a new primary cell **409.**

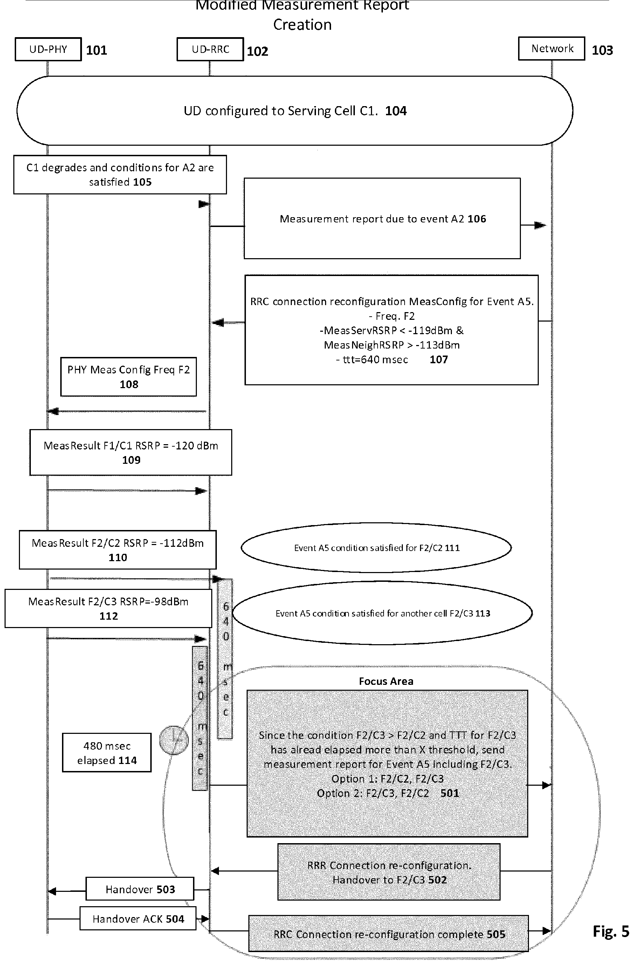

Fig. **5** shows a modified handover procedure as depicted by communication between a user device and a network, according to another aspect of the disclosure. The user device may be configured one a serving cell C1 **104** in range of a second cell C2. The serving cell service may degrade, whether from change in distance between the cell and the user device, interference, or otherwise. Where the serving cell degrades beyond a threshold value **105** (measurement reporting code A2), the user device informs the network that the serving cell has degraded beyond a threshold **106** (as displayed by measurement code A2). The network instructs the user device to measure neighboring cells to determine whether their signals may be stronger than the degraded primary cell signal, which, depending on the relevant standards, may be known as an A5 measurement report trigger **107.** The instruction for measurement is passed from the RRC **102** to the Physical Layer **101.** The user device begins to measure neighboring cells. In this case, and as an example, the user device measures Cell 1 on Frequency 1 (the serving cell) **109**, Cell 2 on Frequency 2 **110**, and Cell 3 on Frequency 2 **112.** In this example, Cell 1 is operating at -120dBm **109**, Cell 2 is operating at -112dBm **110**, and Cell 3 is operating at -98dBm **112.** For each set of measurements, the measurements are conducted repeatedly through a measurement timer **114**, which, in this case, and by way of example, is set to 640 msec. The first measurement timer is set for measurement of Cell 2, and the second measurement timer is set for measurement of Cell 3. At the expiration of the first measurement timer, which corresponds to Cell 2, the preliminary results from the second measurement timer, which corresponds to Cell 3, indicate that Cell 3 is operating at -98dBm, which is preferable to the -112dBm signal strength of Cell 2. Furthermore, at the expiration of the first measurement timer, the duration of the second measurement timer has elapsed beyond a predetermined threshold. This predetermined threshold may be selected by the network or the user device and can be any value, whether an absolute duration or a percentage of completion. Because the preliminary measurements of Cell 3 are greater than the measurements of Cell 2, and because the measurement timer for Cell 3 has exceeded a predetermined threshold, it may be advantageous to send the measurement report for Cell 3 at this time. Because Cell 2 and Cell 3 operate on the same frequency, they can be included in the same measurement report. The measurement report can be configured according to 2 options: the cells can be listed according to the order they were measured (see option 1), or the cells can be listed according to their signal strength (see option 2) **501.** The order may carry significance since the network may select the first acceptable reported cell for handover, despite a better cell being reported subsequently in the same report or in a subsequent report transmitted immediately thereafter. Based on the results of the measurement report, the network will determine a cell for handover, in this case Cell 3 **502.** The instruction for handover is communicated from the RRC to the physical layer **503.** Once the handover is achieved, a handover acknowledgment is transmitted from the physical layer to the RRC **504.** The RRC then informs the network that the re-configuration is complete **505.**

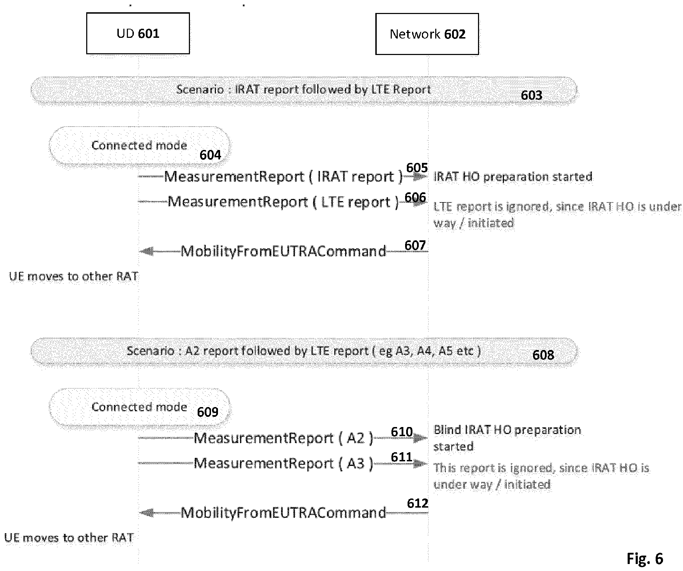

Fig. **6** shows a legacy method of sending measurement reports according to another aspect of the disclosure. In a cell handover situation between a user device **601** and a network **602**, the user device may need to provide reports according to multiple report formats. For example, a user device may send an Inter-Radio Access Technology ("IRAT") report followed by an LTE report **603.** While the user devices are in connected mode **604**, the user device may first send an IRAT report **605** to the network **602.** Upon receiving the IRAT report, the network will begin an IRAT handover. Before the handover is complete, the user device may send an LTE measurement report **606.** Under these circumstances, the network **602** may ignore the LTE report because the IRAT handover is underway or has already been initiated. Thus, the network may instruct the user device to perform a handover pursuant to the IRAT report **607**, even where a cell from the LTE report may be preferable. Similarly, the user device may submit an A2 report followed by an LTE report **608.** Once again in connected mode **609**, the user device **601** sends an A2 measurement report **610** to the network **602.** The network **602** begins a IRAT handover preparation. During the course of this preparation, the user device then sends an A3 measurement report **611** to the network **602.** The network may ignore this report because the IRAT handover is already underway or has been initiated. The network **602** instructs the user device **601** to perform a handover pursuant to the first report **612.**

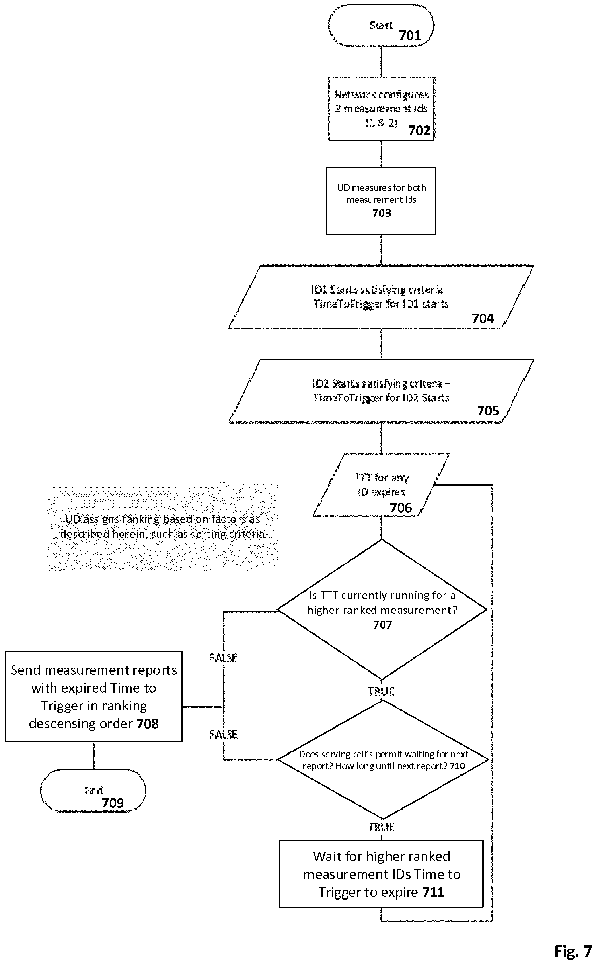

Fig. **7** shows a prioritization of measurement reports according to an aspect of the Disclosure. According to this procedure, a user device starts a measurement procedure **701** and configures two measurement IDs, 1 and 2 **702.** The user device measures signals for both measurement IDs **703.** The user device determines that ID 1 has satisfied an initial criterion and thus begins a time to trigger timer for ID 1 **704.** During the measurement of ID 1, the user device determines ID 2 to has satisfied threshold criteria and thus begins a time to trigger timer for ID 2 **705.** The time to trigger timer expires for one of the IDs **706.** At first expiration of a time to trigger timer, the user device determines whether any additional time to trigger timers are currently running for a higher ranked cell **707.** The methods and criteria for assessing ranking are discussed herein, *infra,* and may comprise, but are not limited to, ranking based on sorting critera. In the event that no other time to trigger timers are running for a higher ranked cell, the user device may send the measurement reports for any expired time to trigger timers in descending order of ranking **708.** Upon transmitting these prioritized reports, the measurement prioritization process ends **709.** In the event, however, that the user device determines that other time to trigger timers are currently running for a higher ranked cell (as discussed in **707**), the user device may determine the duration until the next report, and whether the serving cell's quality permits waiting for the next report before transmitting measurement data **710.** Where the serving cell quality permits waiting for the next report to transmit measurement data, the user device may wait for a higher priority measurement ID's time to trigger timer to expire **711.** This permits additional, pending measurements to be included in a measurement report.

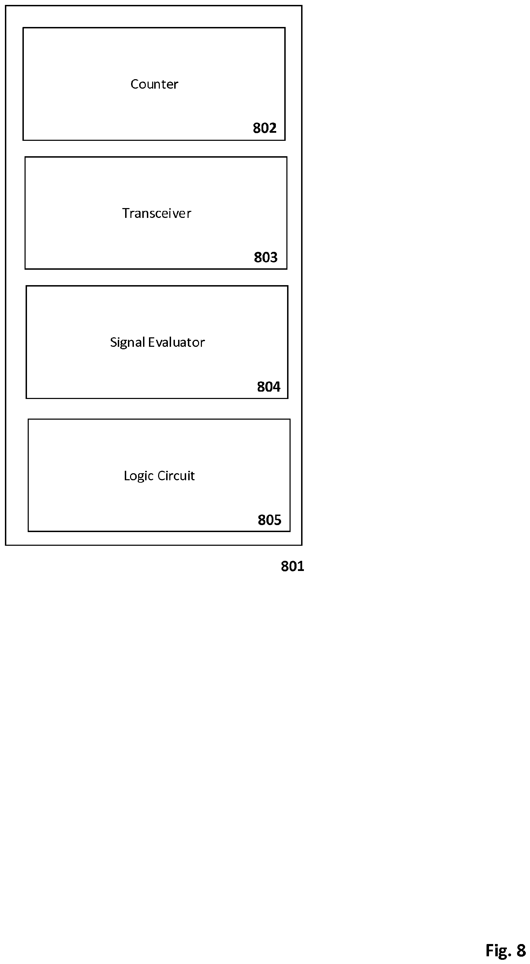

Fig. **8** is a device for wireless cell handover **801** including a counter **802**, a transceiver **803**, a signal evaluator **804**, and a logic circuit **805.** The counter **802** is configured to set a first timer for signal measurement of a first neighboring cell and one or more additional timers for signal measurement of one or more additional neighboring cells; the transceiver **803** is configured to receive a signal from a first neighboring cell and one or more additional neighboring cells; the signal evaluator **804** is configured to perform a signal measurement on the first neighboring cell during the first timer and to perform a signal measurement on the one or more additional neighboring cells during the one or more additional timers; and the logical circuit **805** is configured to determine a subset of the one or more additional neighboring cells according to a measurement progress criterion; to evaluate the first cell and the subset of cells for handover according to a sorting criterion; and to generate a measurement report including an identifying information for at least one cell within the first subset.

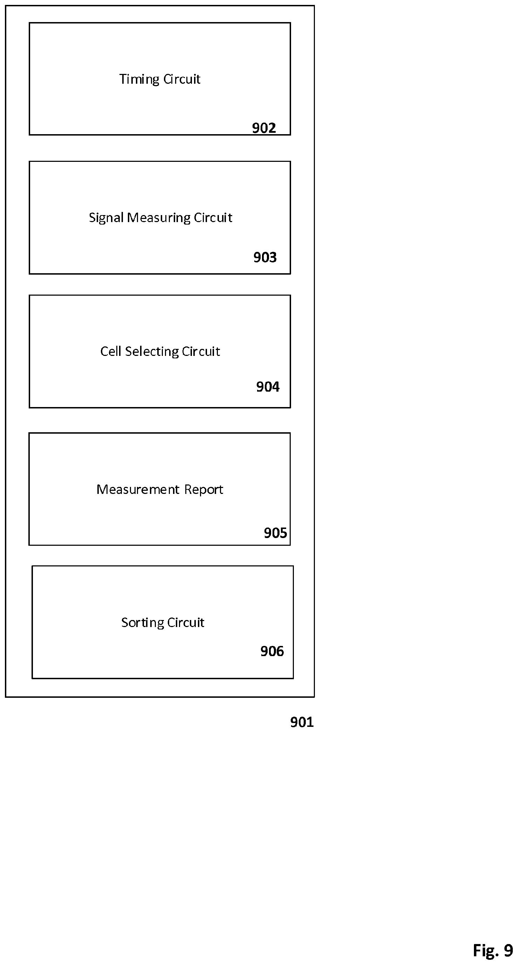

Fig. **9** is a system for wireless cell handover **901** including a timing circuit **902,** a signal measuring circuit **903**, a cell selecting circuit **904**, a measurement report circuit **905**, and optionally a sorting circuit **906.** The timing circuit **902** is configured to measure a first time period for signal measurement of a first radio cell, and to measure one or more additional time periods for one or more additional radio cells; the signal measuring circuit **903** is configured to perform a signal measurement on the first radio cell during the first time period and to perform a signal measurement of one or more additional radio cells during the one or more additional time periods; the cell selecting circuit **904** is configured to determine a subset of the one or more additional radio cells according to a measurement progress criterion; and the measurement report circuit **905** configured to generate a measurement report including an identifying information for at least one cell within the first subset. In addition, the system may include a sorting circuit **905**, configured to evaluate the first cell and the subset of cells for handover according to a sorting criterion

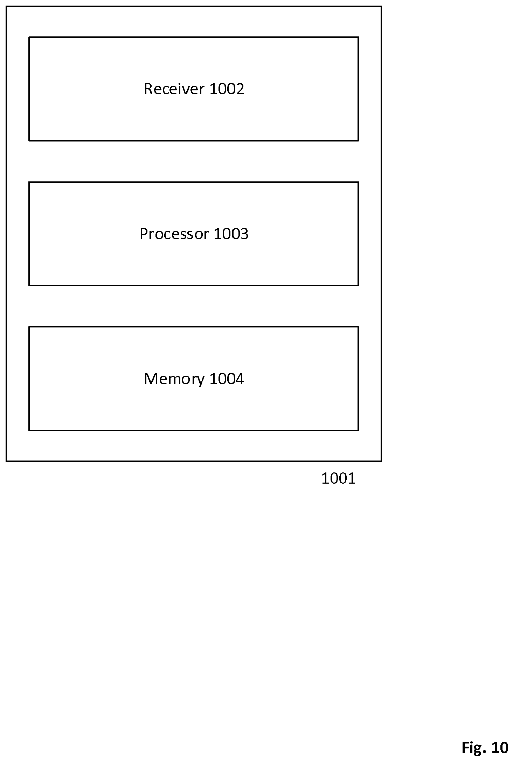

Fig. **10** is an apparatus for signal measurements of neighboring cell radio signals **1001** including:
a receiver **1002**, configured to receive signals from a first neighboring radio cell and to receive signals from one or more additional neighboring radio cells; a processor **1003**,
configured to perform a signal measurement during a first time period on the signal received from the first neighboring radio cell; to perform a signal measurement during one or more additional time periods on the one or more signals received from the one or more additional neighboring radio cells; and to determine a subset of the one or more additional neighboring radio cells according to a measurement progress criterion; and a memory **1004**, configured to store the subset of the one or more additional neighboring radio cells;
wherein the processor determines that the first time period has expired as first of the time periods and generates at least one measurement report message including information about the signal measurement of at least one neighboring radio cell within the determined subset.

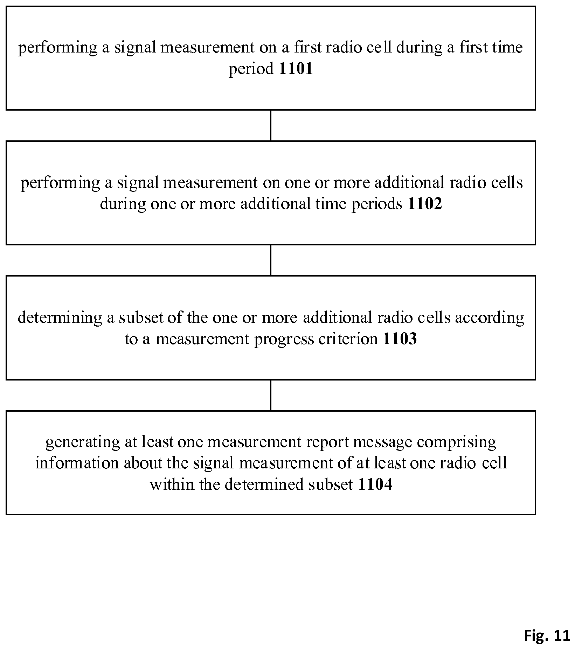

Fig. **11** is a method for wireless cell handover including performing a signal measurement on a first radio cell during a first time period **1101**; performing a signal measurement on one or more additional radio cells during one or more additional time periods **1102;** determining a subset of the one or more additional radio cells according to a measurement progress criterion **1103**; and generating at least one measurement report message including information about the signal measurement of at least one radio cell within the determined subset **1104.**

### Consequences of suboptimal handover

As can be seen from the above figures, networks may tend to select a candidate cell for handover based on the candidate cell being listed first on the measurement report. Because the order of being listed may be somewhat arbitrary, and because the first-listed candidate cell may not in fact be the best candidate cell for handover, such listings of candidate cells can result in suboptimal handovers or handovers to a suboptimal cell. Such handovers are generally undesirable for several reasons. First, suboptimal handovers can result in throughput decrease by moving to a legacy radio access technology, a less suitable cell, or a lower frequency air interface variant ("AIV"). Second, suboptimal handovers can degrade user experience by moving to a cell, frequency, or radio access technology that does not satisfy the user's requirements. Third, suboptimal handover can increase the number of handovers required, since a suboptimal handover is often remedied with an additional handover to a preferred cell. Fourth, suboptimal handovers result in increased power consumption. To better ensure that the network selects preferred handover candidates, and thus to avoid the consequences of suboptimal handover, it is useful to develop strategies to prioritize candidate cells in measurement reports.

According to the foregoing, it may be desirable to provide the network with additional information for its evaluation of whether to initiate a handover, and to which cell the handover should be assigned. This aims to provide the network with relevant measurements about the other cells that have satisfied one or more conditions for handover, or are about to satisfy said conditions for handover, and under some circumstances, to rank this information according to various criteria.

It is herein disclosed to include in a first measurement report following the expiration of a first measurement timer, information about a cell other than the first measured cell. This can be achieved according to two aspects of the disclosure. According to the first aspect of the disclosure, a measurement report is prepared at the expiration of a first measurement timer, wherein said measurement report includes information about at least one cell for which the measurement timer has not yet expired. According to the second aspect of the disclosure, and upon the expiration of the first measurement timer, creation of the measurement report is postponed until completion of a second measurement timer, and the measurement report is prepared such that the measurement report includes information about at least one cell other than the cell corresponding to the first timer.

Ordering cell measurement information in a measurement report, or ordering measurement reports, requires either sending of measurement information from incomplete cell testing procedures or delaying a measurement report to either include measurement data for additional cells whose measurements are expected to conclude in the near future, or to send another measurement report first, which is of higher importance.

With respect to sending measurement report information from incomplete cell testing procedures, the user device may set a first time to trigger timer for a first neighboring cell, during which the user device will measure a quality of the first neighboring cell, such as signal strength, for example. At the conclusion of the first time to trigger timer, the user device may determine whether other time to trigger timers are operating for one or more other neighboring cells. Where such timers are pending, the user device may then identify one or more time to trigger timers that have elapsed beyond a predetermined threshold. The user device may then transmit, along with or instead of information from testing the first neighboring cell, information from one or more additional neighboring cells, despite the cell testing procedures (i.e. timers) for the one or more additional neighboring cells being incomplete. In this way, completion of the predetermined threshold serves as a probability that sufficient testing on the one or more additional neighboring cells has been performed to result in a reasonable probability of accuracy, despite the testing period not having completely elapsed.

Alternatively, the measurement report can be delayed to permit additional time to complete additional measure timers. By delaying the measurement report, the user device obtains additional time to complete measurement of one or more additional cells and/or frequencies. Under the delay procedure, the user device starts a time to trigger timer for measurement of a first neighboring cell. At the conclusion of the time to trigger timer, and instead of immediately reporting the results of the testing of this first neighboring cell, the user device determines whether any other time to trigger timers are in progress, and it may delay the measurement report for a sufficiently long period until the time to trigger timer for one or more additional cells has completed, and thus to include in the measurement report information from one or more additional neighboring cells. The user device may be configured to only delay the measurement report where at least one additional cell time has elapsed beyond a predetermined threshold, such that a delay in transmitting the measurement timer is minimized or reduced.

### Sorting Background

To improve handover key performance indicators, event reporting criteria can be established such that, whenever a cell satisfies one or more event reporting criteria, the user device may determine whether better neighbor cells may imminently satisfy event reporting criterion, i.e. whether the time to trigger timer is near expiration. If the user device determines the presence of a neighboring cell satisfying an event criteria evaluation, it may prioritize the neighboring cell when sending a measurement report.

According to an aspect of the disclosure, handover key performance indicators are targeted by ensuring that the network, through a measurement report message, has sufficient knowledge about each cell already satisfying, or about to satisfy, a reporting condition. This enables the network to select a best possible cell for handover and thereby increases the probability of handover success.

### Delaying a first report when a second is pending

Where a network receives multiple received measurement reports, even within a short duration, networks will often react to the first received measurement report and ignore the remaining reports. For example, if a user device sends two measurement reports in close proximity to one another, even where the cell reported in the second report is demonstrably better, the network will often ignore the second report and will select a cell and the first report for handover. Historically, user devices have not enjoyed the flexibility to prioritize cells, frequencies, or RATs to obtain the best handover results. As mobile service delivery evolves to accommodate an expanding variety of services, various AIVs, and user device types, it is expected that user devices may have mobility preferences based on their own capabilities, services, or use case. These preferences it may impact the ability to deliver optimal user service.

It has been observed that during periods of poor serving cell radio conditions, the network may initiate a handover based on a first received measurement report with an A5 event. This can happen even where the user device later sends a subsequent measurement report containing preferable cells satisfying A5 criteria before receiving handover instructions from the network, but following the network's decision to perform a handover. Although the cell in the first report may be suboptimal, it is the first cell evaluated by the user device that satisfies report conditions and may thus be selected as the handover cell.

According to one aspect of the Disclosure, and upon expiration of the time to trigger timer for a cell satisfying an event criteria, the user device will evaluate if any other cells satisfy an event criteria condition, and whether the time to trigger timer is running for these cells and has already elapsed passed a predetermined threshold. According to one aspect of the disclosure, the predetermined threshold may be 60%, although the value may be greater or less than 60% and can be set in accordance with the needs of the network, the user device, the manufacturer, or otherwise. If the predetermined threshold is satisfied, the user device will generate a measurement report for the cell having completed a timer beyond the predetermined threshold. The user device may send this measurement report information before, after, or concurrently with measurement report information for the first additional cell, depending on the variables selected as disclosed herein.

According to one aspect of the disclosure, measurement reports may be sorted where reports must be triggered at the same time, or where reports will be sent within a brief period of one another. For example, report one may be delayed if report two, which features a preferred cell, would be sent within *x* ms, wherein *x* is a value or a range. According to one aspect of the Disclosure, *x* may be, but is not limited to, 100.

### Event criteria

According to one aspect of the Disclosure, a neighboring cell may be required to satisfy one or more event criteria for the neighboring cell to be considered for a handover. An event criterion may be a measurement or other indication that the neighboring cell carries a probability of being a successful handover candidate. A common event criterion is a signal strength above a predetermined threshold. Other event criteria may be, without limitation, signal to noise ratio, or any other qualification for identifying a cell with a probability of a successful handover. When using the signal strength criterion, neighboring cells are identified, and one or more calculations of the signal strength are performed. Where the signal strength of a neighboring cell is above a predetermined threshold, the signal strength event criterion is satisfied.

According to one aspect of the disclosure, a measurement report may include the strongest neighboring cells, provided that said neighboring cells satisfy an event criteria.

### Sorting, Generally

Sorting may occur based on a time window /or a sorting criteria. With respect to the time window, criteria are chosen to determine how reports are sorted or suspended in the event that a higher priority report will be triggered within a predetermined duration. With respect to the sorting criteria, criteria are chosen to determine the sorting order and the order in which measurement reports are decided.

### Sorting time window

Sorting time window refers to reports that are triggered at the same time, as well as reports that are triggered within a short period of one another. This can be characterized as immediate sorting or delayed sorting. Under immediate sorting, reports must be sent at the same point in time. Because this method does not result in a delay to any report, it presents little risk of suboptimal handover and thus can be implemented regardless of serving cell conditions. Delayed sorting, however, applies when two reports are sent within close proximity to one another, but not at the same time. Thus, at a given point when a first measurement report(A) is due to be sent, the user device determines whether another measurement report(B) with a higher priority/importance/preference/better signal strength or is otherwise preferential based on a sorting criterion has a currently running time to trigger timer that is due to expire within a predetermined time. Where such a time to trigger timer is running, the user device waits for the higher priority report(B) to be sent before sending the first measurement report(A). That is to say the first report(A) is delayed to accommodate the second report(B). As is described above, an alternative to delayed sorting is to send a first report(A) at its scheduled time and to include with the first report information from a second cell or send the second report(B), for which a predetermined percent or duration of a corresponding timer is complete.

### Sorting criteria

Measurement reports may be sorted based on the contents of the report. Specifically, they may be sorted based on the report including a preferred cell, frequency, or radio access technology. These may be the cells, frequencies, or radio access technologies most likely to create a best user experience or otherwise selected by the user or the user device. Preferred cells may be selected by the user or the user device based on any criteria. Once a preferred cell is selected, the user device may prioritize the preferred cell by transmitting its corresponding measurement report before transmitting another measurement report. Alternatively, the user device may prioritize the preferred cell by transmitting its corresponding measurement information before another cell's information within a same measurement report. Moreover, priority may be influenced by the selection of a preferred AIV or RAT, such as where the user device is stationary and thus best benefited by higher throughputs. Further, with respect to RATs, and without limitation, a user or user device may prefer 5G to LTE, or LTE to 3G. Even within the same RAT, there may be preferred frequencies due to the availability of various services. For example, the use of a closed subscriber group ("CSG"), evolved multimedia broadcast multicast service ("eMBMS"), high speed train ("HST") technology, or otherwise, may require specific frequencies, or make specific frequencies more desirable, even within a single RAT. Thus, the user device may elect to use a service, the use of which causes one or more frequencies to be preferred. These factors can influence creation or transmission of a measurement report. Specifically, these factors can cause a user device to transmit a measurement report for one cell before a measurement report for another cell, or they can cause a user device to list one cell's information in a measurement report before listing another cell's information in the same report.

### Sorting, Priority Based (type, capability, service, use / case)

Cells may be ranked by multiple layers of priority. As an example, the user device may have a RAT prioritization as follows: 5G, LTE, 3G. A cell providing a 5G service may thereafter further be sorted by preferred frequency, and/or then further sorted by preferred cell. A cell providing an LTE service may be further sorted by preferred frequencies (such as eMBMS, HST, CSG, etc.) and further sorted by preferred cells. As cell providing a 3G service may be further sorted by preferred frequency (hotspot, etc.), and then further sorted by preferred cell (based on RSCP / ECN0).

According to one aspect of the disclosure, and for a stationary user device operating under the New Radio/ 5G, a cell offering one very good beam may be preferable to a cell offering the best N beams, given that the user equipment is unlikely to move and would therefore obtain better service from a single high-quality beam.

### Sorting, Ranking Based

According to one aspect of the Disclosure, sorting may be performed based on cell ranking. With respect to the ranking based sorting, it is possible that multiple reports will have the same priority, and therefore further sorting can be performed based on additional factors. For example, measurement reports may be sorted based on the quality of cell or cells contained in those reports. Thus, a report containing a preferred cell, or cell with a stronger signal, may be sent before a less preferred cell or cell with a weaker signal.

For example, and according to one aspect of the disclosure, where Cell A and Cell B are neighboring cells, and where Cell A has an expired time to trigger timer, but Cell B has a running time to trigger timer, and both Cell A and Cell B are operating on the same frequency, it is envisioned that where Cell B satisfies the event criteria window requirement, Cell B can be added to the Cell A measurement report. The order of these cells within the measurement report can be determined based on the following options.

### Sorting, Ranking Based, First cell is reported first

According to another aspect of the Disclosure, the method of sorting may require that the first cell be reported first. Under this option, the actual cell for which the measurement report was triggered is listed first, and any additional cells are listed thereafter in order of signal strength. Thus, under this scenario, the measurement report would first include Cell A, followed by Cell B.

### Sorting, Ranking Based, Signal Strength

According to another aspect of the Disclosure, cells may be sorted based upon signal strength. For example, upon expiration of the time to trigger timer for a cell satisfying event reporting conditions, the user device will evaluate what other cells satisfy the event evaluation conditions configured by the network, and whether the time to trigger timer is running for these cells and has already elapsed passed a predetermined threshold. As discussed above, the user device may include preliminary results from ongoing timers in the measurement report, or it may delay the measurement report to allow for conclusion of one or more additional timers that are ongoing at the conclusion of the measurements for the first cell. The user device may prioritize or sort the cells in the measurement report based on signal strength.

For example, and according to one aspect of the Disclosure, the measurement report includes cells that are sorted in order of signal strength. Therefore, under the second option, even though Cell A first triggered the creation of the measurement report, because Cell B has a stronger signal strength, Cell B will be listed above Cell A in the measurement report.

### Sorting, Ranking Based, Cell Quality

According to another aspect of the Disclosure, cells may be sorted based on RSRQ or RSSNRWhere this occurs, the user device may test the neighboring cell and/or the one or more additional neighboring cells for RSRQ/RSSNR. The results can be used to rank or order the neighboring cells for inclusion in one or more measurement reports. Depending on the configuration, the RSRQ/RSSNR may be included within the measurement report.

### Sorting, Ranking Based, Ranking Indicator

According to another aspect of the Disclosure, cells may be sorted based on Rank Indicator ("RI"). Where this occurs, the user device may test the neighboring cell and/or the one or more additional neighboring cells for RI, which provides information about the antenna performance within a multiple-antenna system. The RI results can be used to rank or order the neighboring cells for inclusion in one or more measurement reports.

### Sorting, Ranking Based, Frequency Dependent

According to another aspect of the disclosure, cell sorting may be frequency dependent. Depending on the standard for communication used, it may not be permitted to combine two cells of different frequencies in the same measurement report. Under such circumstances, the cells will be included on separate measurement reports, wherein each measurement report corresponds to a specific frequency. Thus, if a first neighboring cell belongs to a different frequency from the cell having already satisfied the event criteria, the user device may prioritize sending measurement reports for the better-evaluated cell and corresponding frequency. Thus, the user device may select a frequency of the best evaluated cell and generate a measurement report containing one or more cells on this frequency that have satisfied the event criteria, and the user device may then send this measurement report to the network. Thereafter, the user device will send all remaining measurement reports to the network in the order of the reports' ranking as defined *supra,* whether with respect to sorting criteria or otherwise.

### Priority, Ranking based, Threshold for Delivery

According to another aspect of the disclosure, measurement reports may be delayed depending on user conditions. For example, and according to one aspect of the Disclosure, measurement reports may be delayed as long as the related serving cell is functioning within an acceptable condition. Because handover procedures are often instigated due to decaying cell service, the prospect of an impending handover generally implies an unsatisfactory primary cell service. Where the service is unsatisfactory, it may still be possible to delay a measurement report to better ensure handover to an optimal cell. However, where the quality of the serving cell is significantly eroded, further waiting may jeopardize future service. This can be taken into account in determining whether to delay a measurement report. Thus, according to one aspect of the disclosure, a threshold value may be set, whereby measurement reports for a serving cell of diminished quality, but still performing above the threshold value, may be delayed. Conversely, where the serving cell is performing below the threshold value, measurement reports should not be delayed, as delay may jeopardize future cell service.

As an example, a threshold may be set to control where the user device may delay a measurement report. Without limitation, the threshold may be a signal strength, such that a serving cell is evaluated to determine whether it is performing above or below a signal strength threshold *x.* According to one aspect of the Disclosure, *x* may be selected as a marker of probability that a cell connection will terminally erode before a handover can be completed. Where a serving cell is operating above the threshold, there is a probability that the serving cell will continue to function until the completion of a handover. Where a serving cell is operating below a threshold, there is a probability that the serving cell signal will further to erode before completion of the handover, and that the erosion is likely to prevent, or even merely to complication, handover completion.

According to another aspect of the disclosure, the threshold for delaying a measurement report may be variable dependent on other conditions, which may be known as a time window variable. Under the time window variable schema, the duration of a measurement report delay may be shortened or lengthened depending upon cell quality. For example, where the serving cell is still performing reasonably well, the measurement report may be delayed for a comparatively lengthy time, such as one second. On the other hand, where the serving cell is performing moderately unsatisfactorily, the measurement report may be delayed only a brief time, such as 200 ms. Further still, if the serving cell is quite unsatisfactory, it may be inappropriate to delay the measurement report.

The term "timer" is used herein to describe a period for measurement of cell signals. This can be a timer, such as a countdown timer, a clock, or any other element to measure a specific period of time. The timer may be its own circuit, a device, a program, software, or otherwise.

It is described herein that the user device sends a measurement report to the base station including at least cell information for a cell within a subset of additional cells beyond the initial cell for which a signal is measured. The measurement report may be a measurement report for the purpose of providing information about handover cell candidates. It is anticipated, however, that the measurement report may include signal measurements that are used by the base station for other purposes, and therefore the measurement report is not limited to handover. It is anticipated that the measurement report may be used for shifting frequencies or for any other purpose.

The term "neighboring cell" is used herein to mean a cell for which the user device receives a signal. By using the term "neighboring," no geographic or distance limitations are implied, nor is it contemplated that a neighboring cell must be an adjacent cell. Where a cell transmits a signal that is received by the user device, said cell can be considered a neighboring cell. The terms "first radio cell" and "one or more additional radio cells" refer to neighboring cells as defined herein as cells which transmit a signal received by the user device.

As an overview, and without limitation, where a serving cell deteriorates, the user device may locate, test, and ultimately report neighboring cells based on a variety of criteria. The cells may be ranked and / or reported based on preference, whereby a cell, a frequency, and/or a wireless transmission technology (such as a RAT) is preferred. Cells may be ranked and/or reported based on signal quality, signal strength, RSRQ, Signal to noise ratio RSSNR, RI, order of testing, or otherwise. Because it may not be permitted to report cells of different frequencies within the same measurement report, the cell's frequency may alter the order or timing of reporting. Because sorting cells generally requires delaying the measurement report for the cell with the first completed test, the sorting procedure may be initiated or prevented based on a quality of the serving cell, whereby sorting will only be performed where the serving cell operates above a threshold.

## Claims

1. A method of radio signal measurement of neighboring cells performed by a user device, the method comprising:
performing a signal measurement on a first neighboring radio cell during a first time period (301, 302);
performing a signal measurement on one or more additional neighboring radio cells during one or more additional time periods (303, 304) set to expire after the first time period;
determining a subset of the one or more additional radio cells according to a measurement progress criterion (404);
determining that the first time period has expired (404);
generating at least one measurement report message comprising
information about the signal measurement of the neighboring radio cell and the subset of the one or more additional neighboring radio cells for which the measurement progress criterion is fulfilled, wherein the measurement progress criterion is a fulfillment of a predetermined duration or percentage of completion of the one or more additional time periods (405, 407, 408).

2. The method of radio signal measurement according to claim 1, wherein the measurement report message is a Measurement Report according to a Radio Access Technology.

3. The method of radio signal measurement according to claims 1 or 2, further comprising evaluating the first radio cell and at least one radio cell within the determined subset according to a sorting criterion.

4. The method of radio signals measurement according to any one of claims 1 to 3, further comprising delaying generation of the measurement report until completion of one of the additional time periods corresponding to at least one of the additional radio cells within the subset (711).

5. The method of radio signal measurement according to any one of claims 1 through 4, wherein the sorting criterion is a priority-based criterion, further comprising sorting based on at least one of radio access technology preference, air interface variant preference, or frequency preference.

6. The method of radio signal measurement according to any one of claims 1 through 4, wherein the sorting criterion is a ranking-based criterion, wherein the cells are ranked based on at least one of reference signal received power, reference signal received quality, or signal to noise ratio.

7. The method of radio signal measurement according to any one of claims 1 through 6, further comprising determining a frequency of the first radio cell; determining a frequency of at least one cell within the subset, designated for inclusion in the measurement report; grouping the cells by like frequencies; and transmitting a first measurement report containing a frequency group comprising a highest rated cell according to the sorting criterion.

8. A neighboring cell radio signal measurement system (901) comprising:
a timing circuit (902), configured to measure a first time period for signal measurement of a first neighboring radio cell (301, 302), and to measure one or more additional time periods for one or more additional neighboring radio cells (303, 304);
a signal measuring circuit (903), configured to perform a signal measurement on the first neighboring radio cell during the first time period (301, 302) and to perform a signal measurement of one or more additional neighboring radio cells during the one or more additional time periods (303, 304) set to expire after the first time period;
a cell selecting circuit (904), configured to determine a subset of the one or more additional neighboring radio cells according to a measurement progress criterion (404); and
a measurement report circuit (905), configured to determine that the first time period has expired, and to generate a measurement
report comprising information about the signal measurement of the first neighboring radio cell and at least one of the subset of the one or more additional neighboring radio cells for which the measurement progress criterion is fulfilled, wherein the measurement progress criterion is a fulfillment of a predetermined duration or percentage of completion of the one or more additional
time periods (405, 407, 408).

9. The radio signal measurement system according to claim 8, further comprising a sorting circuit (906), configured to evaluate the first cell and the subset of cells for handover according to a sorting criterion.

10. The radio signal measurement system according to claim 8 or 9, further comprising delaying generation of the measurement report until completion of an additional time period corresponding to at least one of the additional radio cells within the subset (711).

11. The radio signal measurement system according to any one of claims 8 through 10, wherein the sorting criterion is a priority-based criterion, further comprising sorting based on at least one of radio access technology preference, air interface variant preference, or frequency preference.

12. The radio signal measurement system according to any one of claims 8 through 10, wherein the sorting criterion is a ranking-based criterion, wherein the cells are ranked based on at least one of reference signal received power, reference signal received quality, or signal to noise ratio.

13. A neighboring cell radio signal measurement apparatus (1001) comprising:
a receiver (1002), configured to receive signals from a first neighboring radio cell and to receive signals from one or more additional neighboring radio cells;
a processor (1003), configured to perform a signal measurement during a first time period on the signal received from the first neighboring radio cell (301, 302); to perform a signal measurement during one or more additional time periods on the one or more signals received from the one or more additional neighboring radio cells (303, 304), the one or more additional time periods expiring after the first time period; and to determine a subset of the one or more additional neighboring radio cells according to a measurement progress criterion (404); and
a memory (1004), configured to store the subset of the one or more additional radio cells;
wherein the processor determines that the first time period has expired (404) and generates at least one measurement report message comprising information about the signal measurement of the first neighboring radio cell and at least one radio cell within the subset of the one or more additional neighboring radio cells for which the measurement progress criterion is fulfilled, wherein the measurement progress criterion is a fulfillment of a predetermined duration or percentage of completion of the one or
more additional time periods (405, 407, 408).

## Patentansprüche

1. Verfahren zur Funksignalmessung benachbarter Zellen, das durch ein Benutzergerät ausgeführt wird, wobei das Verfahren Folgendes umfasst:
Ausführen einer Signalmessung an einer ersten benachbarten Funkzelle während einer ersten Zeitperiode (301, 302);
Ausführen einer Signalmessung an einer oder mehreren zusätzlichen benachbarten Funkzellen während einer oder mehrerer zusätzlicher Zeitperioden (303, 304), die so eingestellt sind, dass sie nach der ersten Zeitperiode ablaufen;
Bestimmen einer Untermenge der einen oder mehreren zusätzlichen Funkzellen gemäß einem Messfortschrittskriterium (404);
Bestimmen, dass die erste Zeitperiode abgelaufen ist (404) ;
Erzeugen mindestens einer Messberichtsnachricht, die Folgendes umfasst:
Informationen über die Signalmessung der benachbarten Funkzelle und die Untermenge der einen oder mehreren zusätzlichen benachbarten Funkzellen, für die das Messfortschrittskriterium erfüllt ist, wobei das Messfortschrittskriterium eine Erfüllung einer vorgegebenen Dauer oder eines vorgegebenen Fertigstellungsprozentsatzes der einen oder mehreren zusätzlichen Zeitperioden (405, 407, 408) ist.

2. Verfahren zur Funksignalmessung nach Anspruch 1, wobei die Messberichtsnachricht ein Messbericht gemäß einer Funkzugangstechnologie ist.

3. Verfahren zur Funksignalmessung nach Anspruch 1 oder 2, das ferner Beurteilen der ersten Funkzelle und mindestens einer Funkzelle innerhalb der bestimmten Untermenge gemäß einem Sortierkriterium beinhaltet.

4. Verfahren zur Funksignalmessung nach einem der Ansprüche 1 bis 3, das ferner Verzögern der Erzeugung des Messberichts bis zum Abschluss einer der zusätzlichen Zeitperioden, die mindestens einer der zusätzlichen Funkzellen innerhalb der Untermenge (711) entsprechen, umfasst.

5. Verfahren zur Funksignalmessung nach einem der Ansprüche 1 bis 4, wobei das Sortierkriterium ein auf Prioritäten basierendes Kriterium ist, das ferner Sortieren basierend auf Funkzugangstechnologiepräferenz und/oder Luftschnittstellenvariantenpräferenz und/oder Frequenzpräferenz umfasst.

6. Verfahren zur Funksignalmessung nach einem der Ansprüche 1 bis 4, wobei das Sortierkriterium ein auf einer Rangfolge basierendes Kriterium ist, wobei die Zellen basierend auf Referenzsignalempfangsleistung und/oder Referenzsignalempfangsqualität und/oder Signal-Rausch-Verhältnis in eine Rangfolge gebracht werden.

7. Verfahren zur Funksignalmessung nach einem der Ansprüche 1 bis 6, das ferner Folgendes umfasst:
Bestimmen einer Frequenz der ersten Funkzelle; Bestimmen einer Frequenz von mindestens einer Zelle innerhalb der Untermenge, die zur Aufnahme in den Messbericht bestimmt ist;
Gruppieren der Zellen nach gleichen Frequenzen; und Übertragen eines ersten Messberichts, der eine Frequenzgruppe enthält, die eine Zelle mit der höchsten Einstufung gemäß dem Sortierkriterium umfasst.

8. Nachbarzellenfunksignalmesssystem (901), das Folgendes umfasst:
eine Zeitgeberschaltung (902), die dazu ausgelegt ist, eine erste Zeitperiode zur Signalmessung einer ersten benachbarten Funkzelle (301, 302) zu messen, und eine oder mehrere zusätzliche Zeitperioden für eine oder mehrere zusätzliche benachbarte Funkzellen (303, 304) zu messen;
eine Signalmessschaltung (903), die dazu ausgelegt ist, eine Signalmessung an der ersten benachbarten Funkzelle während der ersten Zeitperiode (301, 302) auszuführen, und eine Signalmessung an einer oder mehreren zusätzlichen benachbarten Funkzellen während der einen oder mehreren zusätzlichen Zeitperioden (303, 304), die so eingestellt sind, dass sie nach der ersten Zeitperiode ablaufen, auszuführen;
eine Zellenauswahlschaltung (904), die dazu ausgelegt ist, eine Untermenge der einen oder mehreren zusätzlichen benachbarten Funkzellen gemäß einem Messfortschrittskriterium (404) zu bestimmen; und
eine Messberichtschaltung (905), die dazu ausgelegt ist, zu bestimmen, dass die erste Zeitperiode abgelaufen ist, und einen Messbericht zu erzeugen, der Informationen über die Signalmessung der ersten benachbarten Funkzelle und mindestens eine der Untermenge der einen oder mehreren zusätzlichen benachbarten Funkzellen umfasst, für die das Messfortschrittskriterium erfüllt ist, wobei das Messfortschrittskriterium eine Erfüllung einer vorgegebenen Dauer oder eines vorgegebenen Fertigstellungsprozentsatzes der einen oder mehreren zusätzlichen Zeitperioden (405, 407, 408)ist.

9. Funksignalmesssystem nach Anspruch 8, das ferner eine Sortierschaltung (906)umfasst, die dazu ausgelegt ist, die erste Zelle und die Untermenge von Zellen zur Übergabe gemäß einem Sortierkriterium zu beurteilen.

10. Funksignalmesssystem nach Anspruch 8 oder 9, das ferner Verzögern der Erzeugung des Messberichts bis zum Abschluss einer zusätzlichen Zeitperiode, die mindestens einer der zusätzlichen Funkzellen innerhalb der Untermenge (711) entspricht, umfasst.

11. Funksignalmesssystem nach einem der Ansprüche 8 bis 10, wobei das Sortierkriterium ein auf Prioritäten basierendes Kriterium ist, das ferner das Sortieren basierend auf Funkzugangstechnologiepräferenz und/oder Luftschnittstellenvariantenpräferenz und/oder Frequenzpräferenz umfasst.

12. Funksignalmesssystem nach einem der Ansprüche 8 bis 10, wobei das Sortierkriterium ein auf einer Rangfolge basierendes Kriterium ist, wobei die Zellen basierend auf Referenzsignalempfangsleistung und/oder Referenzsignalempfangsqualität und/oder Signal-RauschVerhältnis in eine Rangfolge gebracht werden.

13. Funksignalmessvorrichtung benachbarter Zellen (1001), die Folgendes umfasst:
einen Empfänger (1002), der dazu ausgelegt ist, Signale von einer ersten benachbarten Funkzelle zu empfangen, und Signale von einer oder mehreren zusätzlichen benachbarten Funkzellen zu empfangen;
einen Prozessor (1003), der dazu ausgelegt ist, eine Signalmessung während einer ersten Zeitperiode an dem von der ersten benachbarten Funkzelle (301, 302) empfangenen Signal auszuführen; eine Signalmessung während einer oder mehrerer zusätzlicher Zeitperioden an dem einen oder den mehreren Signalen, die von der einen oder den mehreren zusätzlichen benachbarten Funkzellen (303, 304) empfangen werden, auszuführen, wobei die eine oder mehreren zusätzlichen Zeitperioden nach der ersten Zeitperiode ablaufen; und eine Untermenge der einen oder mehreren zusätzlichen benachbarten Funkzellen gemäß einem Messfortschrittskriterium (404) zu bestimmen; und
einen Speicher (1004), der dazu ausgelegt ist, die Untermenge der einen oder mehreren zusätzlichen Funkzellen zu speichern;
wobei der Prozessor bestimmt, dass die erste Zeitperiode abgelaufen ist (404), und mindestens eine Messberichtsnachricht erzeugt, die Informationen über die Signalmessung der ersten benachbarten Funkzelle und mindestens eine Funkzelle innerhalb der Untermenge der einen oder mehreren zusätzlichen benachbarten Funkzellen umfasst, für die das Messfortschrittskriterium erfüllt ist, wobei das Messfortschrittskriterium eine Erfüllung einer vorgegebenen Dauer oder eines vorgegebenen Fertigstellungsprozentsatzes der einen oder mehreren zusätzlichen Zeitperioden (405, 407, 408) ist.

## Revendications

1. Procédé de mesure de signaux radio de cellules voisines effectué par un dispositif utilisateur, le procédé comprenant de :
réaliser une mesure de signal sur une première cellule radio voisine au cours d'une première période de temps (301, 302) ;
réaliser une mesure de signal sur une ou plusieurs autres cellules radio voisines pendant une ou plusieurs autres périodes de temps (303, 304) prévues pour expirer après la première période de temps;
déterminer un sous-ensemble des une ou plusieurs autres cellules radio en fonction d'un critère d'avancement de mesure (404) ;
déterminer que la première période de temps a expiré (404) ;
générer au moins un message de rapport de mesure comprenant des informations sur la mesure de signal de la cellule radio voisine et du sous-ensemble des une ou plusieurs autres cellules radio voisines pour lesquelles le critère d'avancement de mesure est rempli, dans lequel le critère d'avancement de mesure est un accomplissement d'une durée prédéterminée ou d'un pourcentage d'achèvement des une ou plusieurs autres périodes de temps (405, 407, 408).

2. Procédé de mesure de signaux radio selon la revendication 1, dans lequel le message de rapport de mesure est un rapport de mesure selon une technologie d'accès radio.

3. Procédé de mesure de signaux radio selon la revendication 1 ou 2, comprenant en outre d'évaluer la première cellule radio et au moins une cellule radio au sein du sous-ensemble déterminé selon un critère de tri.

4. Procédé de mesure de signaux radio selon l'une quelconque des revendications 1 à 3, comprenant en outre de retarder la génération du rapport de mesure jusqu'à l'achèvement de l'une des autres périodes de temps correspondant à au moins l'une des autres cellules radio dans le sous-ensemble (711).

5. Procédé de mesure de signaux radio selon l'une quelconque des revendications 1 à 4, dans lequel le critère de tri est un critère basé sur la priorité, comprenant en outre un tri basé sur au moins l'une d'une préférence de technologie d'accès radio, d'une préférence de variante d'interface radio, ou d'une préférence de fréquence.

6. Procédé de mesure de signaux radio selon l'une quelconque des revendications 1 à 4, dans lequel le critère de tri est un critère basé sur le classement, dans lequel les cellules sont classées en fonction d'au moins l'un d'une puissance du signal de référence reçu, d'une qualité du signal de référence reçu, ou d'un rapport signal sur bruit.

7. Procédé de mesure de signaux radio selon l'une quelconque des revendications 1 à 6, comprenant en outre de déterminer une fréquence de la première cellule radio ; déterminer une fréquence d'au moins une cellule au sein du sous-ensemble, désignée pour être incluse dans le rapport de mesure; grouper les cellules par fréquences identiques ; et transmettre un premier rapport de mesure contenant un groupe de fréquences comprenant une cellule la mieux classée en fonction du critère de tri.

8. Système de mesure de signaux radio de cellules voisines (901), comprenant :
un circuit de base de temps (902), configuré pour mesurer une première période de temps pour une mesure de signal d'une première cellule radio voisine (301, 302), et pour mesurer une ou plusieurs autres périodes de temps pour une ou plusieurs autres cellules radio voisines (303, 304) ;
un circuit de mesure de signal (903), configuré pour effectuer une mesure de signal sur la première cellule radio voisine au cours de la première période de temps (301, 302) et pour effectuer une mesure de signal d'une ou plusieurs autres cellules radio voisines au cours d'une ou plusieurs autres périodes de temps (303, 304) prévues pour expirer après la première période de temps;
un circuit de sélection de cellule (904), configuré pour déterminer un sous-ensemble des une ou plusieurs autres cellules radio voisines selon un critère d'avancement de mesure (404) ; et
un circuit de rapport de mesure (905), configuré pour déterminer que la première période de temps a expiré, et pour générer un rapport de mesure comprenant des informations sur la mesure de signal de la première cellule radio voisine et d'au moins l'une du sous-ensemble des une ou plusieurs autres cellules radio voisines pour lesquelles le critère d'avancement de mesure est rempli, dans lequel le critère d'avancement de mesure est un accomplissement d'une durée prédéterminée ou d'un pourcentage d'achèvement des une ou plusieurs autres périodes de temps (405, 407, 408).

9. Système de mesure de signaux radio selon la revendication 8, comprenant en outre un circuit de tri (906), configuré pour évaluer la première cellule et le sous-ensemble de cellules pour un transfert intercellulaire en fonction d'un critère de tri.

10. Système de mesure de signaux radio selon la revendication 8 ou 9, comprenant en outre de retarder la génération du rapport de mesure jusqu'à l'achèvement d'une autre période de temps correspondant à au moins l'une des autres cellules radio dans le sous-ensemble (711).

11. Système de mesure de signaux radio selon l'une quelconque des revendications 8 à 10, dans lequel le critère de tri est un critère basé sur la priorité, comprenant en outre un tri basé sur au moins l'une d'une préférence de technologie d'accès radio, d'une préférence de variante d'interface radio, ou d'une préférence de fréquence.

12. Système de mesure de signaux radio selon l'une quelconque des revendications 8 à 10, dans lequel le critère de tri est un critère basé sur le classement, dans lequel les cellules sont classées en fonction d'au moins l'un d'une puissance du signal de référence reçu, d'une qualité du signal de référence reçu, ou d'un rapport signal sur bruit.

13. Appareil de mesure de signaux radio de cellules voisines (1001), comprenant :
un récepteur (1002), configuré pour recevoir des signaux provenant d'une première cellule radio voisine et pour recevoir des signaux provenant d'une ou plusieurs autres cellules radio voisines;
un processeur (1003), configuré pour effectuer une mesure de signal pendant une première période de temps sur le signal reçu à partir de la première cellule radio voisine (301, 302) ; effectuer une mesure de signal pendant une ou plusieurs autres périodes de temps sur une ou plusieurs signaux reçus à partir des une ou plusieurs autres cellules radio voisines (303, 304), les une ou plusieurs autres périodes de temps expirant après la première période de temps ; et déterminer un sous-ensemble des une ou plusieurs autres cellules radio voisines en fonction d'un critère d'avancement de mesure (404) ; et
une mémoire (1004), configurée pour stocker le sous-ensemble des une ou plusieurs autres cellules radio;
dans lequel le processeur détermine que la première période de temps a expiré (404) et génère au moins un message de rapport de mesure comprenant des informations sur la mesure de signal de la première cellule radio voisine et d'au moins une cellule radio au sein du sous-ensemble des une ou plusieurs autres cellules radio voisines pour lesquelles le critère d'avancement de mesure est rempli, dans lequel le critère d'avancement de mesure est un accomplissement d'une durée prédéterminée ou d'un pourcentage d'achèvement des une ou plusieurs autres périodes de temps (405, 407, 408).
